# EUROPÄISCHE PATENTANMELDUNG

(11) **EP 0 725 472 A2**
(43) Veröffentlichungstag der Anmeldung: **07.08.1996**
(21) Anmeldenummer: 95120339.7
(22) Anmeldetag: 21.12.1995
(51) Int. Cl.: H02J 7/10

(54) **Elektrisches Steuergerät, insbesondere Netzladegerät für Elektrofahrzeuge**

(30) Priorität: 02.02.1995 DE 19503310
(71) Anmelder: ROBERT BOSCH GMBH, 70442 Stuttgart (DE)
(72) Erfinder: Bolz, Peter, Ing., D-71696 Moeglingen (DE)

(57) **Zusammenfassung**

Es wird ein elektronisches Steuergerät, insbesondere ein Netzladegerät für Elektrofahrzeuge, vorgeschlagen, das ein Hochspannungsteil (11) und eine dieses steuernde Steuereinrichtung besitzt, die wenigstens zwei Steuerteile (18, 19) mit jeweils eigenem Mikrocontroller aufweist. Von diesen Steuerteilen ist ein erstes Steuerteil (18) über Meß- und/oder Steuerleitungen galvanisch mit Komponenten des Hochspannungsteils (11) verbunden, und ein zweites Steuerteil (19) ist über einen Meß- und/oder Steuersignale übertragenden seriellen Datenbus (20) mit dem ersten Steuerteil (18) verbunden. In die Leitung oder die Leitungen des Datenbusses (20) ist jeweils ein diese galvanisch unterbrechender Übertrager (12, 13) geschaltet. Hierdurch kann eine Vielzahl von Steuer- und Meßsignalen über eine sehr geringe Zahl von galvanisch trennenden Übertragern übertragen werden, wobei auch die Steuersignale über denselben oder dieselben Übertrager übertragen werden können. Hierdurch wird bei guter Spannungssicherheit eine kostengünstige und flexible Lösung erreicht.

## Beschreibung

### STAND DER TECHNIK

Die Erfindung betrifft ein elektrisches Steuergerät, insbesondere ein Netzladegerät für Elektrofahrzeuge, mit einem Hochspannungsteil und einer dieses steuernden, einen Mikrocontroller aufweisenden Steuereinrichtung.

Derartige, als Netzladegeräte ausgebildete Steuergeräte besitzen häufig einen getakteten Leistungsregelkreis und sind eingangsseitig mit dem 110 V/230 V-Netz verbunden, so daß hohe Spannungen auftreten, die aus Sicherheitsgründen von der Steuereinrichtung ferngehalten werden müssen. Dies ist deshalb problematisch, da die Steuereinrichtung über Meß- und Steuerleitungen mit dem Leistungsregelkreis und den übrigen Komponenten des Hochspannungsteils verbunden sein muß.

Zur Spannungssicherheit ist es bekannt, potentialfreie Meßaufnehmer zu verwenden, die jedoch sehr teuer sind, wenn eine hinreichende Genauigkeit erreicht worden soll. Weiterhin benötigen solche Meßwertaufnehmer häufig mehrere verschiedene Versorgungsspannungen. Weiterhin ist die Verwendung von seriellen A/D- bzw. D/A-Wandlern bekannt, die über Optokoppler angesteuert werden, um die einschlägigen Schutzvorschriften zu erfüllen. Derartige Wandler müssen jedoch für jeden Meßwertaufnehmer vorgesehen sein, was die Anordnung insbesondere bei einer großen Zahl von Meßwertaufnehmern aufwendig und kompliziert macht.

### VORTEILE DER ERFINDUNG

Das erfindungsgemäße elektrische Steuergerät mit den kennzeichnenden Merkmalen des Hauptanspruchs hat den Vorteil, daß die Zahl der Kommunikationsleitungen zwischen dem Hochspannungsteil bzw. Leistungsteil einerseits und dem eigentlichen Steuerteil andererseits unabhängig von der Anzahl der zu übertragenden Vorgabe- bzw. Meßwerte auf ein Minimum reduziert werden kann, im Normalfall auf zwei oder drei Leitungen. Möglich ist auch eine Übertragung über nur eine Leitung. Hierdurch ergeben sich um so größere Kostenvorteile, je mehr Vorgabe- bzw. Meßwerte übertragen werden sollen, im Vergleich zur Übertragung über Einzelsignalleitungen. Die Zahl der im Hinblick auf die Spannungssicherheit erforderlichen Übertrager bzw. Entkopplungsglieder zur Hochspannungsseite hin kann reduziert werden, insbesondere auf zwei oder drei Entkopplungsglieder. Falls später weitere Vorgabe- bzw. Meßwerte zur Übermittlung an das zweite Steuerteil erforderlich werden sollten, können diese leicht an das erste Steuerteil galvanisch angelegt werden, ohne daß das zweite Steuerteil und vor allem die sicherheitskritische Schnittstelle zwischen beiden Steuerteilen sowie das Leiterplatten-Layout und die Zuleitungen und Entkopplungsglieder verändert werden müßten. Dies gilt natürlich auch für die umgekehrte Übertragungsrichtung. Hierdurch wird eine deutliche Erhöhung der Flexibilität erreicht.

Durch die in den Unteransprüchen aufgeführten Maßnahmen sind vorteilhafte Weiterbildungen und Verbesserungen des im Hauptanspruch angegebenen elektrischen Steuergeräts möglich.

Die Übertrager bzw. Entkopplungsglieder sind bevorzugt als Optokoppler ausgebildet, wobei prinzipiell auch andere Entkopplungsglieder, wie potentialfreie induktive Übertrager, möglich sind. Zum Anschluß des aus zwei oder drei Leitungen bestehenden seriellen Datenbusses weisen die beiden Steuerteile vorzugsweise jeweils eine asynchrone serielle Schnittstelle auf.

Das erste Steuerteil ist in variabler Weise mit Meßgrößen erfassenden Meßeinrichtungen des Hochspannungsteils und/oder von davon angeschlossenen zu steuernden Einrichtungen verbunden, wobei es zusätzlich auch noch über die Steuer- und/oder Regelsignale übertragenden Steuerleitungen mit einem Leistungsteil des Hochspannungsteils verbunden sein kann. Dieses Leistungsteil ist insbesondere ein Leistungsregelkreis, wobei sich die Anwendung für einen Leistungsregelkreis eines Netzladegeräts als besonders vorteilhaft erwiesen hat.

Die über die Steuerleitungen zu übertragenden Steuer- und/oder Regelsignale sind zweckmäßigerweise Sollwerte für Strom und/oder Spannung und/oder Ein-/Ausschaltsignale, während die Meßsignale insbesondere Istwerte für Ströme und/oder Spannungen und/oder Temperaturmeßwerte sind.

Die Temperaturmeßwerte sind bei einer Ausbildung des Steuergeräts als Netzladegerät insbesondere Meßsignale von Temperatursensoren an diesem Netzladegerät und/oder an den zu ladenden Batterien.

Das zweite Steuerteil ist vorzugsweise das Hauptsteuerteil. Hierbei kann es sich in vorteilhafter Weise um die Steuerelektronik für ein Netzladegerät handeln, das als Batterie-Management-Zentrale ausgebildet oder mit einer solchen verbunden sein kann, und das weiterhin Diagnose-Schnittstellen enthalten und Anzeigen bedienen kann.

### ZEICHNUNG

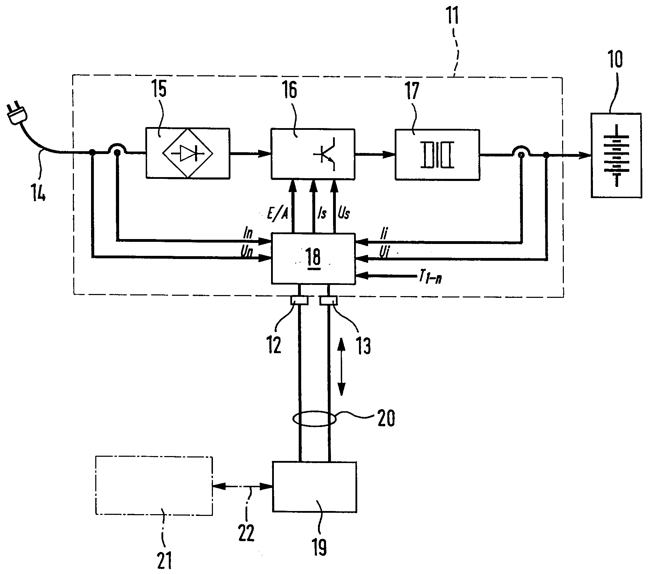

Ein Ausführungsbeispiel der Erfindung ist in der Zeichnung dargestellt und in der nachfolgenden Beschreibung näher erläutert. Die einzige Figur zeigt das Ausführungsbeispiel als Blockschaltbild.

### BESCHREIBUNG DES AUSFÜHRUNGSBEISPIELS

Das in der einzigen Figur als Blockschaltbild dargestellte Ausführungsbeispiel zeigt ein Netzladegerät, das vor allem zur Aufladung einer aus vielen Einzelbatterien zusammengesetzten Traktionsbatterie 10 für Elektrofahrzeuge geeignet ist. In einem einen Bereich des Netzladegeräts darstellenden Hochspannungsteil 11 treten Netz- und Traktionsbatteriepotentiale auf, die die Schutzkleinspannung bei weitem übersteigen, so daß das Hochspannungsteil 11 vom übrigen sicherheitskritischen Teil der Schaltung durch Optokoppler 12, 13 entkoppelt ist.

Eingangsseitig ist das Hochspannungsteil 11 an das 110 V/230 V-Netz über ein Netzkabel 14 anschließbar. In einem Gleichrichterblock 15 wird die Netzspannung gleichgerichtet und als Gleichspannung einem Leistungsregelkreis 16 zugeführt. Dessen geregelt getaktete Ausgangsspannung von üblicherweise 20 KHz bis 200 KHz wird einem Transformatorteil 17 zugeführt, das ausgangsseitig den erforderlichen Ladestrom und die erforderliche Ladespannung für die Traktionsbatterie 10 zur Verfügung stellt.

Eine elektronische Steuereinrichtung zur Steuerung des Ladevorgangs besteht aus zwei Steuerteilen 18, 19, die jeweils einen Mikrocontrollr enthalten und miteinander über einen aus zwei Datenleitungen bestehenden seriellen Datenbus 20 miteinander verbunden sind. Hierzu verfügen die beiden Steuerteile 18, 19 jeweils über eine asynchrone serielle Schnittstelle mit je einem Sendeausgang und einem Empfangseingang, über die mit einer festen Taktrate (Baud-Rate) Informationen ausgetauscht werden. Das erste Steuerteil 18 befindet sich innerhalb des Hochspannungsteils 11, während das zweite Steuerteil 19 über die in die Leitungen des seriellen Datenbusses 20 geschalteten Optokoppler 12, 13 vom Hochspannungsteil 11 entkoppelt ist. Nicht zwingend nötig, aber zur Erhöhung der Sicherheit kann über eine nicht dargestellte dritte Datenbusleitung und einen dritten Optokoppler ein Reset-Signal übertragen werden, durch das der Mikrocontroller im ersten Steuerteil 18 durch das zweite Steuerteil 19 rückgesetzt werden kann. Das erste Steuerteil 18 ist beispielsweise selbstsynchronisierend programmiert, das heißt, es kann die übrigen Komponenten, insbesondere den Leistungsregelkreis 16, in einen sicheren Zustand (z. B. Aus-Zustand) schalten, wenn die Kommunikation zum zweiten Steuerteil 19 hin unterbrochen ist. Anschließend kann das erste Steuerteil 18 von sich aus versuchen, wieder Kontakt zum zweiten Steuerteil 19 aufzunehmen.

Eine alternative Möglichkeit stellt die Kommunikation über nur einen potentialfreien Übertrager in beide Richtungen (z. B. Trafo) dar, wobei allerdings dann Abstriche an der Reaktionszeit in Kauf genommen werden müssen. Die Synchronisation zwischen den beiden Steuerteilen 18, 19 kann dann beispielsweise über die Zeit vorgenommen werden.

Das erste Steuerteil 18 ist über drei Steuerleitungen mit dem Leistungsregelkreis 16 zur Vorgabe des Strom-Istwerts und des Spannungs-Istwerts für die Traktionsbatterie 10 sowie zur Übertragung von Einschalt-/Ausschaltsignalen E/A für diesen Leistungsregelkreis 16 verbunden. Weiterhin werden dem ersten Steuerteil 18 als Meßsignale die Netzspannung Un und der Netzstrom In, die Istwerte für den Ladestrom Ii und die Ladespannung Ui sowie verschiedene Temperaturmeßwerte T_{1 - n} zugeführt. Diese Temperaturmeßwerte dienen zur Messung von Temperaturen innerhalb des Hochspannungsteils 11 und/oder von Temperaturen in der Traktionsbatterie 10, wobei im Extremfall die Temperatur jeder einzelnen Batteriezelle separat erfaßt werden kann. Die erfaßten Meßwerte werden über den Datenbus 20 dem zweiten Steuerteil 19 zugeführt, das als Hauptsteuerteil ausgebildet ist und die eigentliche Steuerelektronik zur Steuerung des Batterieladevorgangs enthält. Die erfaßten Meßwerte sind dabei nur beispielhaft angegeben. Es können selbstverständlich noch weitere für die Regelung benötigte Meßgrößen erfaßt werden. Die Ladesteuerung erfolgt in Abhängigkeit von Ladeprogrammen, z.B. anhand von Ladekurven oder Kennfeldern in an sich bekannter Weise. Die entsprechenden Vorgabewerte für den Ladestrom Is und die Ladespannung Us werden über den Datenbus 20 und das erste Steuerteil 18 dem Leistungsregelkreis 16 zugeführt.

Prinzipiell ist es unerheblich, welches der beiden Steuerteile 18, 19 die eigentliche Ladesteuerung übernimmt und welches nur als "intelligente" Eingabe-/Ausgabe-Einheit dient. Die Funktionen sind dabei auch austauschbar. So kann das zweite Steuerteil 19 auch als "intelligente" Ansteuereinheit über den Datenbus 20, für Anzeigen und Sonderwünsche dienen, während das erste Steuerteil 18 im Hochspannungsteil 11 die Ladesteuerung und die Verarbeitung der Vorgaben und Meßwerte übernimmt.

Das dargestellte und beschriebene Netzladegerät kann auch einen Teil eines Gesamtbatteriemanagements darstellen, das auch die üblicherweise separate Ladung einer Versorgungsbatterie für das Elektrofahrzeug übernimmt, die für die Beleuchtung, die Stromversorgung von Steuereinheiten und dergleichen zuständig ist. Hierzu kann eine externe, sich außerhalb des Netzgerätes befindende Batteriemanagement-Zentrale 21 vorgesehen sein, die über einen weiteren seriellen Datenbus 22 mit dem zweiten Steuerteil 19 kommuniziert. Alternativ hierzu kann auch das zweite Steuerteil 19 selbst als Batteriemanagement-Zentrale ausgebildet sein.

Die Aufteilung einer elektronischen Steuereinrichtung in zwei entkoppelte Teile zur Steuerung eines auf hohem Spannungsniveau liegenden Geräts kann auch neben der Anwendung bei Netzladegeräten noch andere Anwendungen bei anderen Geräten finden, bei denen derartigen Vorgaben entsprechende Schutzvorschriften existieren.

Anstelle der beschriebenen Optokoppler oder eines Entkoppeltransformators können auch andere Entkopplungsglieder verwendet werden, die eine galvanische Trennung bewirken. Unter der Bezeichnung "Optokoppler" werden auch solche Anordnungen verstanden, bei denen Glasfaserkabel oder ähnliche optische Übertragungseinrichtungen an beiden Enden mit elektro-optischen Wandlern versehen sind.

## Patentansprüche

1. Elektrisches Steuergerät, insbesondere Netzladegerät für Elektrofahrzeuge, mit einem Hochspannungsteil und einer dieses steuernden, einen Mikrocontroller aufweisenden Steuereinrichtung, dadurch gekennzeichnet, daß die Steuereinrichtung wenigstens zwei Steuerteile (18, 19) mit jeweils eigenen Mikrocontrollern aufweist, von denen ein erstes Steuerteil (18) über Meß- und/oder Steuerleitungen galvanisch mit Komponenten des Hochspannungsteils (11) verbunden ist, und von denen ein zweites Steuerteil (19) über einen Meß- und/oder Steuersignale übertragenden seriellen Datenbus (20) mit dem ersten Steuerteil (18) verbunden ist, wobei in die Leitung oder die Leitungen des Datenbusses (20) jeweils ein diese galvanisch unterbrechender Übertrager (12, 13) geschaltet ist.

2. Steuergerät nach Anspruch 1, dadurch gekennzeichnet, daß der oder die Übertrager (12, 13) als Optokoppler ausgebildet sind.

3. Steuergerät nach Anspruch 1 oder 2, dadurch gekennzeichnet, daß der serielle Datenbus (20) zwei oder drei Leitungen aufweist.

4. Steuergerät nach Anspruch 1, dadurch gekennzeichnet, daß nur ein potentialfreier Übertrager für die Kommunikation in beiden Richtungen vorgesehen ist.

5. Steuergerät nach einem der vorhergehenden Ansprüche, dadurch gekennzeichnet, daß die Steuerteile (18,19) jeweils eine asynchrone serielle Schnittstelle aufweisen.

6. Steuergerät nach einem der vorhergehenden Ansprüche, dadurch gekennzeichnet, daß das erste Steuerteil (18) mit Meßgrößen erfassenden Meßeinrichtungen des Hochspannungsteils (11) und/oder von daran angeschlossenen zu steuernden Einrichtungen (10) verbunden ist.

7. Steuergerät nach einem der vorhergehenden Ansprüche, dadurch gekennzeichnet, daß das erste Steuerteil (18) über die Steuer- und/oder Regelsignale übertragenden Steuerleitungen mit einem Leistungsteil (16) des Hochspannungsteil (11) verbunden ist.

8. Steuergerät nach Anspruch 7, dadurch gekennzeichnet, daß das Leistungsteil (16) ein Leistungsregelkreis ist.

9. Steuergerät nach Anspruch 8, dadurch gekennzeichnet, daß das Leistungsteil (16) der Leistungsregelkreis eines Netzladegeräts ist.

10. Steuergerät nach einem der Ansprüche 7 bis 9, dadurch gekennzeichnet, daß die Steuer- und/oder Regelsignale die Sollwerte für Strom und/oder Spannung und/oder Ein-/Ausschaltsignale sind.

11. Steuergerät nach einem der vorhergehenden Ansprüche, dadurch gekennzeichnet, daß die Meßsignale Istwerte für Ströme und/oder Spannungen und/oder Temperaturmeßwerte sind.

12. Steuergerät nach Anspruch 11, dadurch gekennzeichnet, daß die Temperaturmeßwerte Meßsignale von Temperatursensoren am als Netzladegerät ausgebildeten Steuergerät und/oder an den zu ladenden Batterien (10) sind.

13. Steuergerät nach einem der vorhergehenden Ansprüche, dadurch gekennzeichnet, daß das zweite Steuerteil (19) das Hauptsteuerteil der Steuereinrichtung ist.

14. Steuergerät nach Anspruch 13, dadurch gekennzeichnet, daß das zweite Steuerteil (19) als Steuerelektronik für ein Netzladegerät ausgebildet ist.

15. Steuergerät nach Anspruch 13, dadurch gekennzeichnet, daß das zweite Steuerteil (19) als Batteriemanagement-Zentrale ausgebildet oder mit einer solchen externen Batteriemanagement-Zentrale (21) verbunden ist.

16. Steuergerät nach einem der vorhergehenden Ansprüche, dadurch gekennzeichnet, daß wenigstens ein Anschluß für Diagnose- und/oder Kalibrier-Einrichtungen vorgesehen ist.
